# EUROPEAN PATENT SPECIFICATION

(11) **EP 2 698 481 B1**
(45) Date of publication and mention of the grant of the patent: **05.04.2017**
(21) Application number: 12771940.9
(22) Date of filing: 13.04.2012
(51) Int. Cl.: E04B 1/66, B32B 27/00, C08L 33/14, C08L 71/02, C08L 83/12, C09D 171/02, C08G 65/336, C09J 133/06, C09J 171/02, E04F 13/18, E04B 1/70, C08G 65/333

(54) **CLADDING MATERIAL FOR CONSTRUCTION**
MANTELMATERIAL FÜR BAUARBEITEN
MATIÈRE DE REVÊTEMENT POUR UNE CONSTRUCTION

(30) Priority: 15.04.2011 JP 2011091533
(43) Date of publication of application: 19.02.2014
(73) Proprietor: Kaneka Corporation, Osaka-shi, Osaka 530-8288 (JP)
(72) Inventor: OKAMOTO, Toshihiko, Takasago-shi Hyogo 676-8688 (JP)
(74) Representative: Hart-Davis, Jason
(86) International application number: PCT/JP2012/060105
(87) International publication number: WO 2012/141281

(56) References cited:
- EP-A1- 1 288 247
- EP-A1- 1 391 484
- EP-A1- 1 533 341
- JP-A- 5 065 404
- JP-A- 2002 069 288
- JP-A- 2004 002 604
- JP-A- 2010 521 604
- JP-U- H0 289 128
- US-A1- 2009 145 067
- US-A1- 2009 145 067
- US-A1- 2010 209 612

## Description

### TECHNICAL FIELD

The present invention relates to a building exterior material in which a building exterior substrate is coated with a curable composition containing a polyoxyalkylene polymer containing a silicon-containing group which contains a hydroxyl or hydrolyzable group bonded to a silicon atom and can form a siloxane bond to be cross-linked (hereinafter, such a silicon-containing group is also referred to as a "reactive silyl group").

### BACKGROUND ART

Polyolefin nonwoven sheets (for example, Tyvek manufactured by E. I. du Pont de Nemours and Company) having excellent moisture permeability have been conventionally used as sheet materials for prevention of dew condensation on exterior wall materials of timbered houses, mortar finishing houses or the like. Such nonwoven fabrics are disclosed in Patent Literature 1 and the like. Methods for manufacturing the nonwoven fabrics are disclosed in Patent Literature 2 and the like. The nonwoven fabrics thus obtained have a moderate pore size, block water, and have air and water vapor permeabilities. The nonwoven fabrics can prevent the penetration of water from the outside and, at the same time, discharge water remaining in the interior as water vapor to the outside. This solves the problem of pollution of indoor air caused by the occurrence of fungi or deterioration of buildings due to corrosion of wood or steel frame.

Fixtures such as pegs and tuckers are used in order to attach the nonwoven fabrics. Water may leak from a hole formed by such a fixture.

In order to solve such a problem, a waterproof liquid coating material having moisture permeability is developed (Patent Literature 3). In this case, a waterproof coating material layer is continuously formed, and therefore a gap formed by a peg or the like is reduced.

However, the composition used in the waterproof liquid coating material disclosed in Patent Literature 3 or the like uses a latex polymer (aqueous emulsion) and requires a long time to form a coating film at low temperatures or high humidity, which causes the problem of difficulty in application in winter. Since a latex polymer coating film is lacking in elasticity, the latex polymer coating film cannot conform a substrate distorted over a prolonged period, which causes the problems of the occurrence of cracks or fracture and a decrease in waterproofness, or the like.

Meanwhile, organic polymers containing at least one reactive silyl group per molecule are known to have properties that they are cross-linked by siloxane bond formation involving hydrolysis or other reactions of the reactive silyl group due to factors such as moisture even at room temperature, to form rubbery cured products.

Among such reactive silyl group-containing organic polymers, those whose backbone skeleton is a polyoxyalkylene polymer or a poly (meth) acrylate polymer are disclosed in Patent Literatures 4 and 5 and the like, have already been produced industrially, and are widely used in applications such as sealing materials and adhesives.

Since reactive silyl group-containing polyoxyalkylene polymers have a relatively low viscosity, waterproof non-aqueous liquid coating materials having a sufficient applicability can be designed by adding thereto no solvent or a small amount of solvent. Further, the reactive silyl group-containing polyoxyalkylene polymers can offer practical curability even at low temperatures, and thus can be applied in winter. Further, after being cured, the reactive silyl group-containing polyoxyalkylene polymers form rubber-like bodies having favorable elasticity, and sufficient conformability to a substrate can thus be expected.

A building exterior material using a reactive silyl group-containing polyoxyalkylene polymer as a waterproof liquid coating material is disclosed in Patent Literature 6.

### CITATION LIST

### PATENT LITERATURE

Patent Literature 1: JP-B S42-19520 (U. S. Patent No. 3169899)
Patent Literature 2: JP-B S43-21112 (U. S. Patent No. 3532589)
Patent Literature 3: U. S. Patent Application No. 2007/0042196
Patent Literature 4: JP-A S55-9669 (U. S. Patent No. 4507469)
Patent Literature 5: JP-A H11-130931 (U. S. Patent No. 6552118)
Patent Literature 6: U. S. Patent Application No. 2009/0145067

US 2010/0209612 A1 relates to coatings made from silyl-terminated linear prepolymers which may cross-link with the surface of the substrate for coating, wherein the silyl-terminated linear prepolymers may be obtained by reaction of compounds of general formula (I): X-A-X' (I), where A = a polyoxyalkylene chain of ethylene oxide units or ethylene oxide and propylene oxide units with a maximum fraction of 50 wt. % of propylene oxide units based on the weight of A, X = OH, NH₂, NHR, NR₂ or OR, wherein R independently = a linear or branched 1-10 C alkyl, a 6-10 C alkaryl or aralkyl or a 5-10 C aryl and the compound of general formula (1) has a number average molecular weight of at least 100 g/mol, with compounds of general formula (II) Y-B-Si(OR¹), (R²)₃-r, where Y = a group reactive with OH, NH₂, NHR and/or NR₂, B = a chemical bond or a divalent low-molecular weight organic group with preferably 1-50 carbon atoms, OR¹ = a hydrolysable group, R² = a linear or branched 1-6C alkyl and r = a number from 1 to 3 and optionally unreacted hydrogen atoms on the group X and/or the group X' are optionally alkylated.

EP 1 288 247 A1 shows a curable composition which comprises polyoxyalkylene and a vinyl polymer and a plasticizer.

EP 1 391 484 A1 shows a curable composition which comprises a vinyl polymer having a reactive silicon-containing group (a), a polyoxyalkylene polymer having a reactive silicon-containing group (b), and a plasticizer having an acrylic component (c).

EP 1 533 341 A1 shows a curable composition comprising a reactive silicon-group containing polyoxyalkylene polymer (A), such as a reactive silicon group-containing polyoxypropylene; a reactive silicon-group containing vinyl polymer (B), such as a reactive silicon group-containing (meth) acrylate polymer; and a polyoxyalkylene plasticizer (C) having a low molecular weight, such as polyoxypropylene.

### SUMMARY OF INVENTION

### TECHNICAL PROBLEM

However, even if the waterproof liquid coating material described in Patent Literature 6 is used, the moisture permeability of the building exterior material is insufficient, and the improved moisture permeability is desired.

It is an object of the present invention to provide a building exterior material in which a building exterior substrate is coated with a curable composition that contains a reactive silyl group-containing organic polymer, has excellent water vapor permeability (= moisture permeability), can be applied at low temperatures, and shows less migration of plasticizers to a surface of a cured product thereof.

### SOLUTION TO PROBLEM

As a result of intensive investigations in order to solve the problem, the present inventor has found that use of a curable composition containing an organic polymer having a specific structure can significantly improve water vapor permeability of a cured film to be obtained, to remedy the problem. The present invention has been completed based on these findings.

Specifically, the invention of the present application relates to a building exterior material, comprising a building exterior substrate coated with a curable composition comprising an organic polymer (A) containing a silicon-containing group capable of being cross-linked by forming a siloxane bond, wherein the organic polymer (A) is at least one of: a polyoxyalkylene polymer (A1) containing an oxyethylene repeating unit in a backbone skeleton, a weight of the oxyethylene repeating unit in the component (A1) being 1 to 80% by weight of the total weight of the component (A1), and a (meth)acrylate polymer (A2) containing an oxyethylene repeating unit at a side chain, a weight of the oxyethylene repeating unit in the component (A2) being 1 to 50% by weight of the total weight of the component (A2); and the curable composition is cured into a cured product having a thickness of 0.1 to 3.0 mm, wherein the curable composition further comprises a plasticizer (B) which is a polyoxyalkylene polymer (B1) containing an oxyethylene repeating unit in a backbone skeleton.

More preferred is the building exterior material according to the foregoing, wherein a weight of the oxyethylene repeating unit in the component (B1) is 1 to 80% by weight of the total weight of the component (B1).

More preferred is the building exterior material according to any one of the foregoing, wherein the polyoxyalkylene polymer (B1) comprises oxyethylene and oxypropylene as oxyalkylene repeating units constituting a backbone skeleton, and a weight ratio of the oxyethylene and oxypropylene repeating units is 10/90 to 80/20.

More preferred is the building exterior material according to any one of the foregoing, wherein the plasticizer (B) has a number average molecular weight as defined in claim 4.

More preferred is the building exterior material according to any one of the foregoing, wherein the polyoxyalkylene polymer (A1) contains an oxyethylene repeating unit and an oxypropylene repeating unit; a weight of the oxyethylene repeating unit in the component (A1) is 1 to 80% by weight of the total weight of the component (A1); and a weight of the oxypropylene repeating unit in the component (A1) is 1 to 95% by weight of the total weight of the component (A1).

More preferred is the building exterior material according to any one of the foregoing, wherein the polyoxyalkylene polymer (A1) consists only of oxyethylene and oxypropylene as oxyalkylene repeating units constituting a backbone skeleton, and a weight ratio of the oxyethylene and oxypropylene repeating units is 5/95 to 80/20.

More preferred is the building exterior material according to any one of the foregoing, wherein the building exterior substrate is a wood-based substrate or an inorganic substrate.

More preferred is the building exterior material according to the foregoing, wherein the wood-based substrate is at least one selected from the group consisting of solid woods, plywoods, particle boards, oriented strand boards, fiberboards, lumber core boards, and laminated veneer lumbers.

More preferred is the building exterior material according to the foregoing, wherein the inorganic substrate is at least one selected from the group consisting of concrete, mortar, ALC, gypsum, siding boards, and slates.

Preferred embodiments of the present invention include a building exterior wall material, comprising the building exterior material according to any one of the foregoing.

Preferred embodiments of the present invention include a method for waterproofing a building using the building exterior material according to any one of the foregoing.

Preferred embodiments of the present invention include a method for waterproofing an exterior wall of a building using the building exterior material according to any one of the foregoing.

Preferred embodiments of the present invention include a method for waterproofing a periphery of an opening of a building using the building exterior material according to any one of the foregoing.

Preferred embodiments of the present invention include a method for waterproofing a roof of a building using the building exterior material according to any one of the foregoing.

### ADVANTAGEOUS EFFECTS OF INVENTION

The use of the curable composition of the present application enables application at low temperatures. A cured film obtained by applying the curable composition has excellent water vapor permeability, and shows less migration of plasticizers to a surface of a cured product. Therefore, a building exterior material obtained by applying the curable composition enables simple application and prevention of pollution of indoor air of a building.

### DESCRIPTION OF EMBODIMENTS

Hereinafter, the present invention will be described in detail.

In the present invention, a reactive silyl group-containing polyoxyalkylene polymer (A1) and/or a reactive silyl group-containing (meth)acrylate polymer (A2) (hereinafter, collectively referred to also as an "organic polymer") are/is used as a component (A). Favorable water vapor permeability is achieved by using the polyoxyalkylene polymer and/or the (meth) acrylate polymer as the backbone skeleton of the polymer (A). Particularly, the polyoxyalkylene polymer is preferred because it has higher water vapor permeability.

The reactive silyl group present in the reactive silyl group-containing organic polymer is a group that contains a hydroxyl or hydrolyzable group bonded to a silicon atom and can undergo crosslinking through the formation of a siloxane bond by a reaction accelerated by a silanol condensation catalyst. The reactive silyl group may be a group represented by formula (1) :

-SiR¹₃-ₐXₐ (1)

wherein R¹ is a C1 to C20 alkyl group, a C6 to C20 aryl group, a C7 to C20 aralkyl group, or a triorganosiloxy group represented by (R')₃SiO- where each R' is independently a C1 to C20 substituted or unsubstituted hydrocarbon group; each X is independently a hydroxyl group or a hydrolyzable group; and a is any of 1, 2, and 3.

The hydrolyzable group is not particularly limited, and may be any conventionally known hydrolyzable group. Specific examples thereof include a hydrogen atom, a halogen atom, an alkoxy group, an acyloxy group, a ketoxymate group, an amino group, an amido group, an acid amido group, an aminooxy group, a mercapto group, and an alkenyloxy group. Preferred among these are a hydrogen atom, an alkoxy group, an acyloxy group, a ketoxymate group, an amino group, an amido group, an aminooxy group, a mercapto group, and an alkenyloxy group. Particularly preferred is an alkoxy group, in terms of mild hydrolysis and easy workability.

One to three hydrolyzable or hydroxyl groups can be bonded to a single silicon atom, and the number of groups is preferably two or three in terms of curability. When two or more hydrolyzable or hydroxyl groups are bonded to a silicon atom, these groups may be the same as or different from one another. Reactive silyl groups each having three hydroxyl or hydrolyzable groups on a silicon atom are preferred in terms of having high activity to provide favorable curability, and of leading to cured products with excellent recovery, durability, and creep resistance. Also, reactive silyl groups each having two hydroxyl or hydrolyzable groups on a silicon atom are preferred in terms of having excellent storage stability and of leading to cured products with high elongation and high strength.

Specific examples of R¹ in formula (1) include alkyl groups such as a methyl group and an ethyl group; cycloalkyl groups such as a cyclohexyl group; aryl groups such as a phenyl group; aralkyl groups such as a benzyl group; and triorganosiloxy groups represented by (R')₃SiO- with R's each being a group such as a methyl group and a phenyl group. Among these, a methyl group is particularly preferred.

More specific examples of the reactive silyl group include a trimethoxysilyl group, a triethoxysilyl group, a triisopropoxysilyl group, a dimethoxymethylsilyl group, a diethoxymethylsilyl group, and a diisopropoxymethylsilyl group. Preferred are a trimethoxysilyl group, a triethoxysilyl group, and a dimethoxymethylsilyl group as they have high activity to provide favorable curability. Particularly preferred is a trimethoxysilyl group.

Also, a dimethoxymethylsilyl group is particularly preferred in terms of storage stability. In addition, a triethoxysilyl group and a diethoxymethylsilyl group are particularly preferred because they give ethanol as alcohol generated in connection with the hydrolysis reaction of the reactive silyl group, which means they have higher safety.

The reactive silyl group may be introduced by a conventionally known method. Specifically, some exemplary methods are mentioned below.
(I) An organic polymer containing a functional group such as a hydroxyl group within the molecule is allowed to react with an organic compound containing an unsaturated group and an active group that is reactive with the functional group to provide an unsaturated group-containing organic polymer. Alternatively, the functional group-containing organic polymer is allowed to copolymerize with an unsaturated group-containing epoxy compound to provide an unsaturated group-containing organic polymer. Then, the reaction product is allowed to react with a reactive silyl group-containing hydrosilane for hydrosilylation.
(II) An unsaturated group-containing organic polymer obtained in the same manner as in the method (I) is allowed to react with a compound containing a mercapto group and a reactive silyl group.
(III) An organic polymer containing a functional group such as a hydroxyl group, an epoxy group or an isocyanato group within the molecule is allowed to react with a compound containing a reactive silyl group and a functional group that is reactive with the former functional group.

Preferred among these is the method (I), or the method (III) in such a mode that a hydroxyl-terminated polymer is allowed to react with a compound containing an isocyanato group and a reactive silyl group because these methods achieve a high conversion rate in a relatively short reaction time. Moreover, particularly preferred is the method (I) because the curable composition containing the reactive silyl group-containing organic polymer produced by the method (I) has lower viscosity than that in the case of using the organic polymer produced by the method (III), and thus has better workability, and also because the polyoxyalkylene polymer produced by the method (II) has a strong odor due to mercaptosilane.

Specific examples of the hydrosilane compound used in the method (I) include, but not limited to, halogenated silanes such as trichlorosilane, methyldichlorosilane, dimethylchlorosilane and phenyldichlorosilane; alkoxysilanes such as trimethoxysilane, triethoxysilane, methyldiethoxysilane, methyldimethoxysilane, phenyldimethoxysilane and 1-[2-(trimethoxysilyl)ethyl]-1,1,3,3-tetramethyldisiloxane; acyloxysilanes such as methyldiacetoxysilane and phenyldiacetoxysilane; and ketoxymatesilanes such as bis(dimethylketoxymate)methylsilane and bis(cyclohexylketoxymate)methylsilane. Among these, in particular, halogenated silanes and alkoxysilanes are preferred. Most preferred are, in particular, alkoxysilanes because curable compositions to be provided therefrom are mildly hydrolyzed and are easy to handle. Preferred among the alkoxysilanes is methyldimethoxysilane because it is easily available and provides high curability, storage stability, elongation properties and tensile strength to a curable composition containing the resulting organic polymer. In terms of the curability of the curable composition to be provided and the recovery, trimethoxysilane is particularly preferred.

The synthesis method (II) is not particularly limited, and examples thereof include a method of introducing a compound containing a mercapto group and a reactive silyl group into an unsaturated bond moiety of an organic polymer by radical addition reaction in the presence of a radical initiator and/or a radical generation source. Specific examples of the compound containing a mercapto group and a reactive silyl group include, but not limited to, γ-mercaptopropyltrimethoxysilane, γ-mercaptopropylmethyldimethoxysilane, γ-mercaptopropyltriethoxysilane, γ-mercaptopropylmethyldiethoxysilane, mercaptomethyltrimethoxysilane, and mercaptomethyltriethoxysilane.

The synthesis method (III) in which a hydroxyl-terminated polymer is allowed to react with a compound containing an isocyanato group and a reactive silyl group is not particularly limited, and examples thereof include a method as disclosed in JP-A H03-47825. Specific examples of the compound containing an isocyanato group and a reactive silyl group include, but not limited to, γ-isocyanatopropyltrimethoxysilane, γ-isocyanatopropylmethyldimethoxysilane, γ-isocyanatopropyltriethoxysilane, γ-isocyanatopropylmethyldiethoxysilane, isocyanatomethyltrimethoxysilane, isocyanatomethyltriethoxysilane, isocyanatomethyldimethoxymethylsilane, and isocyanatomethyldiethoxymethylsilane.

In the case of a silane compound in which three hydrolyzable groups are bonded to one silicon atom, such as trimethoxysilane, disproportionation may proceed. As the disproportionation proceeds, fairly dangerous compounds such as dimethoxysilane and tetrahydrosilane may be generated. In the case of γ-mercaptopropyltrimethoxysilane or γ-isocyanatopropyltrimethoxysilane, however, such disproportionation will not proceed. Thus, the synthesis method (II) or (III) is preferred in the case that a group in which three hydrolyzable groups are bonded to one silicon atom, such as a trimethoxysilyl group, is used as the silicon-containing group.

On the other hand, the disproportionation will not proceed in the case of a silane compound represented by formula (2) :

H-(SiR²₂O)ₘSiR²₂-R³-SiX₃ (2)

wherein X is defined as mentioned above; (2 × m + 2) of R²s each independently are a hydrocarbon group or a triorganosiloxy group represented by -OSi(R")₃ where R"s each independently are a C1 to C20 substituted or unsubstituted hydrocarbon group, and in terms of availability and cost, R²s each are preferably a C1 to C20 hydrocarbon group, more preferably a C1 to C8 hydrocarbon group, and particularly preferably a C1 to C4 hydrocarbon group; R³ is a divalent organic group, and is preferably a C1 to C12 divalent hydrocarbon group, more preferably a C2 to C8 divalent hydrocarbon group, and particularly preferably a C2 divalent hydrocarbon group, in terms of availability and cost; and m is an integer of 0 to 19, and is preferably 1 in terms of availability and cost. For this reason, the silane compound represented by formula (2) is preferably used in the case of introducing a group in which three hydrolyzable groups are bonded to one silicon atom by the synthesis method (I). Specific examples of the silane compound represented by formula (2) include 1-[2-(trimethoxysilyl)ethyl]-1,1,3,3-tetramethyldisiloxane, 1-[2-(trimethoxysilyl)propyl]-1,1,3,3-tetramethyldisiloxane, and 1-[2-(trimethoxysilyl)hexyl]-1,1,3,3-tetramethyldisiloxane.

The reactive silyl group-containing organic polymer may have a linear or branched structure. The number average molecular weight thereof is 500 to 100,000, more preferably 1,000 to 50,000, and particularly preferably 3,000 to 30,000 when it is determined by GPC and expressed on the polystyrene equivalent basis. When the number average molecular weight is less than 500, an undesirable trend appears with regard to the elongation properties of the cured product; when the number average molecular weight exceeds 100,000, an undesirable trend appears with regard to workability due to the resulting high viscosity.

In order to obtain a rubbery cured product that exhibits high strength, high elongation, and low elastic modulus, the organic polymer suitably contains on average at least one reactive silyl group, and preferably 1.1 to 5 reactive silyl groups, per molecule of the polymer. When the number of reactive silyl groups present in the molecule is less than 1 on average, the curability becomes inadequate, making it difficult to exhibit a good rubber elastic behavior. The reactive silyl group may reside at a terminal of the backbone of the molecular chains of the organic polymer or may reside at a terminal of a side chain or may reside at both positions. In particular, the reactive silyl group resides only at a terminal of the backbone of the molecular chains because the finally formed cured product has an increased effective network length of the organic polymer component, which means that a rubbery cured product having high strength, high elongation and low elastic modulus can readily be obtained.

The polyoxyalkylene polymer (A1) is a polyoxyalkylene polymer which contains an oxyethylene repeating unit in a backbone skeleton, and the weight of the oxyethylene repeating unit in the component (A1) is required to be 1 to 80% by weight of the total weight of the component (A1). The weight is preferably 3 to 70% by weight, more preferably 5 to 60% by weight, still more preferably 10 to 50% by weight, particularly preferably 20 to 45% by weight, and most preferably 30 to 40% by weight. When the weight is lower than 1%, an undesirable trend appears with regard to water vapor permeability; when it exceeds 80%, an undesirable trend appears with regard to workability due to the resulting high viscosity.

The polyoxyalkylene polymer (A1) mentioned above is a polymer that substantially contains a repeating unit represented by formula (3):

-R⁴-O- (3)

wherein R⁴ is a C1 to C14 linear or branched alkylene group. The R⁴ in formula (3) is preferably a C1 to C14, more preferably C2 to C4, linear or branched alkylene group. Specific examples of the repeating units represented by formula (3) include: -CH₂O- -CH₂CH₂O- -CH₂CH(CH₃)O-, -CH₂CH(C₂H₅)O-, -CH₂C(CH₃)₂O-, and -CH₂cH₂CH₂CH₂O-. The backbone skeleton of the polyoxyalkylene polymer may be composed of just one species of repeating unit or may be composed of two or more species of repeating units.

Although the polyoxyalkylene polymer (A1) is required to contain the oxyethylene repeating unit in the backbone skeleton, the polyoxyalkylene polymer (A1) preferably also contains an oxypropylene repeating unit in the backbone skeleton because it is then noncrystalline and has a relatively low viscosity. The weight of the oxypropylene repeating unit in the component (A1) is preferably 1 to 95% by weight, more preferably 5 to 85% by weight, still more preferably 10 to 80% by weight, particularly preferably 20 to 70% by weight, and most preferably 40 to 60% by weight of the total weight of the component (A1). When the weight is less than 1%, an undesirable trend appears with regard to workability due to the resulting high viscosity; when it exceeds 95%, an undesirable trend appears with regard to water vapor permeability.

The oxyalkylene repeating unit constituting the backbone skeleton of the polyoxyalkylene polymer (A1) preferably consists only of oxyethylene and oxypropylene. In that case, the weight ratio of the oxyethylene and oxypropylene repeating units is more preferably 5/95 to 80/20, still more preferably 10/90 to 70/30, particularly preferably 20/80 to 60/40, and most preferably 30/70 to 50/50. When the weight ratio of the oxyethylene and oxypropylene repeating units is smaller than 10/90, an undesirable trend appears with regard to water vapor permeability; when it is more than 80/20, an undesirable trend appears with regard to workability due to the resulting high viscosity.

Examples of the method for synthesizing a polyoxyalkylene polymer include, but not limited to, a polymerization method using an alkali catalyst such as KOH; a polymerization method using a transition metal compound-porphyrin complex catalyst such as a complex obtained by reaction between an organoaluminum compound and a porphyrin, as disclosed in JP-A S61-215623; a polymerization method using a double metal cyanide complex catalyst, as disclosed in JP-B S46-27250 and JP-B S59-15336 and US Patent Nos. 3,278,457, 3,278,458, 3,278,459, 3,427,256, 3, 427, 334 and 3, 427, 335, and other documents; a polymerization method using a catalyst containing a polyphosphazene salt, as disclosed in JP-A H10-273512; and a polymerization method using a catalyst containing a phosphazene compound, as disclosed in JP-A H11-060722.

Examples of the method for producing a polyoxyalkylene polymer containing a reactive silyl group include, but not limited to, methods disclosed in JP-B S45-36319, JP-B S46-12154, JP-A S50-156599, JP-A S54-6096, JP-A S55-13767, JP-A S55-13468 and JP-A S57-164123, JP-B H03-2450, and US Patent Nos. 3, 632, 557, 4,345,053, 4, 366, 307, and 4, 960, 844, and other documents; and methods disclosed in JP-A S61-197631, JP-A S61-215622, JP-A S61-215623, JP-A S61-218632, JP-A H03-72527, JP-A H03-47825, and JP-A H08-231707, which can provide polyoxyalkylene polymers with a high molecular weight and a narrow molecular weight distribution, namely, with a number average molecular weight of 6,000 or higher and Mw/Mn of 1.6 or less.

Each of the reactive silyl group-containing polyoxyalkylene polymers may be used alone, or two or more of these may be used in combination.

A polyoxyalkylene polymer other than the component (A1) may be contained, as long as it will not greatly impair the effects of the present invention.

Meanwhile, the polyoxyalkylene polymer may contain other components such as a urethane bond-containing component in the backbone skeleton.

The urethane bond-containing component is not particularly limited, and examples thereof include groups formed by reaction between an isocyanato group and an active hydrogen group (hereinafter, also referred to as amide segments).

The amide segments are groups represented by formula (4) :

-NR⁵-C(=O)- (4)

wherein R⁵ is a hydrogen atom or a monovalent organic group, preferably a C1 to C20 substituted or unsubstituted monovalent hydrocarbon group, and more preferably a C1 to C8 substituted or unsubstituted monovalent hydrocarbon group.

Specific examples of the amide segments include a urethane group formed by reaction between an isocyanate group and a hydroxyl group; a urea group formed by reaction between an isocyanate group and an amino group; and a thiourethane group formed by reaction between an isocyanate group and a mercapto group. In the present invention, the groups of formula (4) also include groups formed by reaction of active hydrogen in the urethane group, urea group, or thiourethane group with an isocyanate group.

Examples of industrially convenient methods for the production of polyoxyalkylene polymers containing an amide segment and a reactive silyl group include a production method including reacting a polyoxyalkylene polymer terminated with an active hydrogen-containing group with an excessive amount of a polyisocyanate compound to give a polymer having an isocyanate group at a terminal of the polyurethane backbone, and thereafter, or simultaneously, reacting all or a part of the isocyanate groups with the group W of a silicon compound represented by formula (5):

W-R⁶-SiR¹₃₋ₐXₐ (5)

wherein R¹, X and a are defined as mentioned above; R⁶ is a divalent organic group, more preferably a C1 to C20 substituted or unsubstituted divalent hydrocarbon group; W is an active hydrogen-containing group selected from a hydroxyl group, a carboxy group, a mercapto group, and a (primary or secondary) amino group. Known production methods of organic polymers in connection with this production method include ones disclosed in JP-B S46-12154 (U.S. Patent No. 3,632,557), JP-A S58-109529 (U.S. Patent No. 4,374,237), JP-A S62-13430 (U.S. Patent No. 4,645,816), JP-A H08-53528 (EP 0676403), JP-A H10-204144 (EP 0831108), JP-T 2003-508561 (U.S. Patent No. 6,197,912), JP-A H06-211879 (U.S. Patent No. 5,364,955), JP-A H10-53637 (U.S. Patent No. 5,756,751), JP-A H11-100427, JP-A 2000-169544, JP-A 2000-169545, JP-A 2002-212415, Japanese Patent No. 3313360, U.S. Patent Nos. 4,067,844, and 3,711,445, and JP-A 2001-323040.

Mention also may be made of polyoxyalkylene polymers produced by reacting a polyoxyalkylene polymer terminated with an active hydrogen-containing group with a reactive silyl group-containing isocyanate compound represented by formula (6) :

O=C=N-R⁹-SiR¹₃₋ₐXₐ (6)

wherein R¹, R⁶, X and a are defined as mentioned above. Known production methods of organic polymers in connection with this production method include ones disclosed in JP-A H11-279249 (U.S. Patent No. 5,990,257), JP-A 2000-119365 (U.S. Patent No. 6,046,270), JP-A S58-29818 (U.S. Patent No. 4,345,053), JP-A H03-47825 (U.S. Patent No. 5,068,304), JP-A H11-60724, JP-A 2002-155145, JP-A 2002-249538, WO 03/018658, and WO 03/059981.

Examples of the polyoxyalkylene polymer terminated with an active hydrogen-containing group include hydroxyl group-terminated oxyalkylene polymers (polyether polyols).

As the polyether polyol, polyether polyols produced by any production methods may be used, and the polyether polyol is preferably terminated with at least 0.7 hydroxyl groups per molecular terminal as an average of all the molecules. Specific examples thereof include oxyalkylene polymers produced with use of a conventional alkali metal catalyst, and oxyalkylene polymers produced by reacting an alkylene oxide using an initiator having at least two hydroxyl groups, such as a polyhydroxy compound, in the presence of a double metal cyanide complex or cesium.

Among the polymerization methods mentioned above, polymerization methods using a double metal cyanide complex are preferred because they allow production of oxyalkylene polymers having a lower degree of unsaturation, narrow Mw/Mn, lower viscosity, high acid resistance, and high weather resistance.

Specific examples of the polyisocyanate compound mentioned above include aromatic polyisocyanates such as toluene (tolylene) diisocyanate, diphenylmethane diisocyanate, and xylylene diisocyanate; and aliphatic polyisocyanates such as isophorone diisocyanate and hexamethylene diisocyanate.

The above silicon compound of formula (5) is not particularly limited, and specific examples thereof include amino group-containing silanes such as γ-aminopropyltrimethoxysilane, N-(β-aminoethyl)-γ-aminopropyltrimethoxysilane, (N-phenyl)-γ-aminopropyltrimethoxysilane, N-ethylaminoisobutyltrimethoxysilane, N-cyclohexylaminomethyltriethoxysilane, N-cyclohexylaminomethyldiethoxymethylsilane, and N-phenylaminomethyltrimethoxysilane; hydroxyl group-containing silanes such as γ-hydroxypropyltrimethoxysilane; and mercapto group-containing silanes such as γ-mercaptopropyltrimethoxysilane. Also usable as the silicon compound of formula (5) are Michael addition products prepared from various α,β-unsaturated carbonyl compounds and primary amino group-containing silanes, and Michael addition products prepared from various (meth)acryloyl group-containing silanes and primary amino group-containing compounds, as disclosed in JP-A H06-211879 (US Patent No. 5,364,955), JP-A H10-53637 (US Patent No. 5,756,751), JP-A H10-204144 (EP 0831108), JP-A 2000-169544, and JP-A 2000-169545.

The above reactive silyl group-containing isocyanate compound of formula (6) is not particularly limited, and specific examples thereof include γ-trimethoxysilylpropyl isocyanate, γ-triethoxysilylpropyl isocyanate, γ-methyldimethoxysilylpropyl isocyanate, γ-methyldiethoxysilylpropyl isocyanate, trimethoxysilylmethyl isocyanate, triethoxymethylsilylmethyl isocyanate, dimethoxymethylsilylmethyl isocyanate, and diethoxymethylsilylmethyl isocyanate. Also usable as the reactive silyl group-containing isocyanate compound of formula (6) are compounds obtained by reacting the silicon compound of formula (5) with an excessive amount of the polyisocyanate compound mentioned above, as disclosed in JP-A 2000-119365 (US Patent No. 6,046,270).

If the polyoxyalkylene polymer as the component (A) of the present invention contains many amide segments in the backbone skeleton thereof, the polyoxyalkylene polymer may possibly have a high viscosity, leading to a composition with low workability. On the other hand, the amide segments in the backbone skeleton of the component (A) tend to improve the curability of the composition of the present invention. Therefore, when the component (A) contains amide segments in the backbone skeleton thereof, the number of the amide segments per molecule on average is preferably 1 to 10, more preferably 1.5 to 7, and particularly preferably 2 to 5. If the number is less than 1, sufficient curability may not be obtained. If the number is more than 10, the polyoxyalkylene polymer may have a high viscosity and impart low workability to a composition.

The (meth)acrylate polymer (A2) is a (meth)acrylate polymer containing an oxyethylene repeating unit at a side chain, and containing a monomer unit having a polyoxyethylene chain. The weight of the oxyethylene repeating unit in the component (A2) is required to be 1 to 50% by weight of the total weight of the component (A2). The weight is preferably 3 to 45% by weight, more preferably 5 to 40% by weight, still more preferably 10 to 35% by weight, and particularly preferably 20 to 30% by weight. When the weight is less than 1%, an undesirable trend appears with regard to water vapor permeability; when it exceeds 50%, an undesirable trend appears with regard to workability due to the resulting high viscosity.

The monomer having a polyoxyethylene chain is represented by formula (7):

CH₂=C(R⁷)COOR⁸ (7)

wherein R⁷ is a hydrogen atom or a methyl group; and R⁸ is an organic group containing a polyoxyethylene chain. The monomer preferably has one or more units obtained by opening the ring of ethylene oxide, preferably 1 to 50 units, more preferably 1 to 30 units, still more preferably 2 to 20 units, and particularly preferably 2 to 10 units.

The polymer (A2) contains the monomer unit represented by the formula (7), and therefore moisture permeability can be imparted to a curable composition.

Specific examples of the monomer represented by the formula (7) include monomers represented by formulas (8) and (9) :

CH₂=C(R⁷)COO-(CH₂CH₂O)_{b}-(CH₂CH(CH₃)O)_{c}R⁹ (8)

wherein R⁷ is defined as mentioned above; R⁹ is a hydrogen atom or a monovalent hydrocarbon group; b is an integer of 1 or more; and c is 0 or an integer of 1 or more; and CH₂=C(R⁷)COO-(CH₂CH₂O)_{d}-(CH₂CH(CH₃)O)ₑCOC(R⁷)=CH₂ (9)
wherein R⁷ is defined as mentioned above; d is an integer of 1 or more; and e is 0 or an integer of 1 or more.
b and c in the formula (8) and d and e in the formula (9) each are preferably 1 to 50, more preferably 1 to 30, still more preferably 2 to 20, and particularly preferably 2 to 10.

Specific examples of the monomer represented by the formula (7) include 2-hydroxyethyl methacrylate, polyethyleneglycol mono(meth)acrylate, polyethyleneglycol-polypropyleneglycol mono(meth)acrylate, poly(ethyleneglycol-tetramethyleneglycol)mono(meth)acrylate, methoxy polyethyleneglycol mono(meth)acrylate, octoxypolyethyleneglycol-polypropyleneglycol mono(meth)acrylate, lauriloxypolyethyleneglycol mono(meth)acrylate, stealoxypolyethyleneglycol mono(meth)acrylate, aryloxypolyethyleneglycol mono(meth)acrylate, nonylphenoxypolyethyleneglycol mono(meth)acrylate, nonylphenoxypoly(ethyleneglycol-propyleneglycol) mono(meth)acrylate, polyethyleneglycol di(meth)acrylate, polyethyleneglycol-polypropyleneglycol-polyethyleneglycol di(meth)acrylate, ethylene oxide-modified bisphenol A di(meth)acrylate, ethylene oxide-propylene oxide-modified bisphenol A di(meth)acrylate, and ethylene oxide-propylene oxide (block type)-modified bisphenol A di(meth)acrylate.

Specific examples of the monomer represented by the formula (7) include Blemmer E, Blemmer PE, Blemmer AE, Blemmer PEP, Blemmer AEP, Blemmer PET, Blemmer AET, Blemmer PME, Blemmer AME, Blemmer 50POEP-800B, Blemmer 50AOEP-800B, Blemmer PLE, Blemmer ALE, Blemmer PSE, Blemmer ASE, Blemmer PKE, Blemmer AKE, Blemmer PNE, Blemmer ANE, Blemmer PNEP-600, Blemmer PDE, Blemmer ADE, Blemmer PDC, Blemmer ADC, Blemmer PDBE, Blemmer ADBE, Blemmer PDBEP, Blemmer ADBEP, and Blemmer 43PDBPE-800B, which are manufactured by Nippon Oil & Fats Co., Ltd..

The component (A2) can be copolymerized also with a monomer having no polyoxyethylene chain (hereinafter, referred to also as "other monomer"). Examples of a (meth)acrylate monomer having no polyoxyethylene chain include (meth) acrylate monomers such as (meth)acrylic acid, methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-pentyl (meth)acrylate, n-hexyl (meth)acrylate, cyclohexyl (meth)acrylate, n-heptyl (meth)acrylate, n-octyl (meth)acrylate, 2-ethylhexyl (meth)acrylate, nonyl (meth)acrylate, decyl (meth)acrylate, dodecyl (meth)acrylate, phenyl (meth)acrylate, toluyl (meth)acrylate, benzyl (meth)acrylate, 2-methoxyethyl (meth)acrylate, 3-methoxybutyl (meth)acrylate, 2-hydroxyethyl (meth)acrylate, 2-hydroxypropyl (meth)acrylate, stearyl (meth)acrylate, glycidyl (meth)acrylate, 2-aminoethyl (meth)acrylate, γ-(methacryloyloxypropyl)trimethoxysilane, γ-(methacryloyloxypropyl)dimethoxymethylsilane, methacryloyloxymethyltrimethoxysilane, methacryloyloxymethyltriethoxysilane, methacryloyloxymethyldimethoxymethylsilane, methacryloyloxymethyldiethoxymethylsilane, trifluoromethylmethyl (meth)acrylate, 2-trifluoromethylethyl (meth)acrylate, 2-perfluoroethylethyl (meth)acrylate, 2-perfluoroethyl-2-perfluorobutylethyl (meth)acrylate, perfluoroethyl (meth)acrylate, trifluoromethyl (meth)acrylate, bis(trifluoromethyl)methyl (meth)acrylate, 2-trifluoromethyl-2-perfluoroethylethyl (meth)acrylate, 2-perfluorohexylethyl (meth)acrylate, 2-perfluorodecylethyl (meth)acrylate, and 2-perfluorohexadecylethyl (meth)acrylate. The (meth)acrylate polymers include copolymers of such a (meth) acrylate monomer and a vinyl monomer as described below. Examples of the vinyl monomer include styrene monomers such as styrene, vinyltoluene, α-methylstyrene, chlorostyrene, and styrenesulfonic acid and salts thereof; fluorine-containing vinyl monomers such as perfluoroethylene, perfluoropropylene, and vinylidene fluoride; silicon-containing vinyl monomers such as vinyltrimethoxysilane and vinyltriethoxysilane; maleic anhydride, maleic acid, and monoalkyl esters and dialkyl esters of maleic acid; fumaric acid, and monoalkyl esters and dialkyl esters of fumaric acid; maleimide monomers such as maleimide, methylmaleimide, ethylmaleimide, propylmaleimide, butylmaleimide, hexylmaleimide, octylmaleimide, dodecylmaleimide, stearylmaleimide, phenylmaleimide, and cyclohexylmaleimide; nitrile group-containing vinyl monomers such as acrylonitrile and methacrylonitrile; amido group-containing vinyl monomers such as acrylamide and methacrylamide; vinyl esters such as vinyl acetate, vinyl propionate, vinyl pivalate, vinyl benzoate, and vinyl cinnamate; alkenes such as ethylene and propylene; conjugated dienes such as butadiene and isoprene; and vinyl chloride, vinylidene chloride, allyl chloride, and allyl alcohol. Each of these may be used alone, or a plurality of these may be copolymerized. Among the monomers having no polyoxyethylene chain, in terms of physical properties of the resulting product, the polymer is preferably made of a styrene monomer and a (meth)acrylate monomer. The polymer is more preferably a (meth)acrylate polymer comprising an acrylate monomer and a methacrylate monomer, and particularly preferably an acrylate polymer comprising an acrylate monomer. For the application of the present application, a butyl acrylate monomer is more preferably used because the curable composition is required to have a low viscosity and the coating film thereof is required to have physical properties such as a low modulus, high elongation, high weather resistance, and high heat resistance. The term "(meth)acrylic acid," for example, as used herein refers to "acrylic acid and/or methacrylic acid."

The method for synthesizing the (meth)acrylate polymer is not particularly limited, and may be performed by any known method. An ordinary free radical polymerization method in which a compound such as an azo compound or a peroxide is used as a polymerization initiator, disadvantageously generally provides a polymer having a molecular weight distribution as large as 2 or more and a higher viscosity. Hence, a living radical polymerization method is preferably used in order to produce a (meth)acrylate polymer that has a narrow molecular weight distribution and a low viscosity and contains a cross-linkable functional group introduced in a high proportion into molecular chain terminals.

Among the "living radical polymerization methods," the "atom transfer radical polymerization method" in which (meth) acrylate monomers are polymerized with an organic halide or sulfonyl halide compound or the like as an initiator and a transition metal complex as a catalyst is more preferred as the method for producing a (meth)acrylate polymer containing a specific functional group. This is because the atom transfer radical polymerization method provides a polymer terminally containing a halogen or the like which is relatively advantageous to functional-group transformation reactions, and gives a high degree of freedom in designing an initiator and a catalyst, as well as having the characteristics of the "living radical polymerization method." Examples of the atom transfer radical polymerization method include the method described in Matyjaszewski et al., Journal of the American Chemical Society (J. Am. Chem. Soc.), 1995, vol. 117, p. 5614.

As the method for producing a reactive silyl group-containing (meth)acrylate polymer, for example, a production method using the free radical polymerization method with a chain transfer agent is disclosed in JP-B H3-14068, JP-B H4-55444, and JP-A H6-211922 or the like. A production method using the atom transfer radical polymerization method is disclosed in JP-A H9-272714 or the like. However, the production method is not particularly limited thereto.

Each of the reactive silyl group-containing (meth)acrylate polymers may be used alone, or two or more of these may be used in combination.

The component (A1) and the component (A2) of the present application may be used alone, or may be used in combination. The component (A1) of the present application and the (meth)acrylate polymer having no polyoxyethylene chain may be used in combination. The component (A2) of the present application and the polyoxyalkylene polymer having no polyoxyethylene chain may be used in combination.

The method for producing an organic polymer prepared by blending a reactive silyl group-containing polyoxyalkylene polymer and a reactive silyl group-containing (meth)acrylate polymer is proposed in JP-A S59-122541, JP-A S63-112642, JP-A H6-172631, and JP-A H11-116763 or the like, and the production method is not particularly limited thereto.

Further, polyoxyalkylene polymers prepared as blends with a reactive silyl functional group-containing (meth) acrylate polymer may also be produced by polymerization of a (meth) acrylate monomer in the presence of a reactive silyl group-containing polyoxyalkylene polymer. Such production methods are specifically disclosed in, for example, but not limited to, JP-A S59-78223, JP-A S59-168014, JP-A S60-228516, and JP-A S60-228517.

In a curable composition, the addition of a plasticizer enables adjustment of the mechanical properties such as the viscosity and slump properties of the curable composition, and the tensile strength and elongation of the cured product obtained by curing the curable composition.

The plasticizer (B) preferably has a vapor pressure of lower than 0.01 KPa at 20°C. When the vapor pressure at 20°C is 0.01 KPa or more, the vapor may pollute the atmosphere. The plasticizer (B) is preferably unreactive with the component (A).

Examples of the plasticizer include phthalate esters such as dibutyl phthalate, diheptyl phthalate, di(2-ethylhexyl) phthalate, and butyl benzyl phthalate; esters of nonaromatic dibasic acids, e.g., dioctyl adipate, dioctyl sebacate, dibutyl sebacate, and isodecyl succinate; aliphatic esters such as butyl oleate and methyl acetylricinoleate; phosphoric acid esters such as tricresyl phosphate and tributyl phosphate; esters of trimellitic acid; chlorinated paraffins; hydrocarbon oils such as alkylbiphenyls and partially hydrogenated terphenyls; process oils; and epoxy plasticizers such as epoxidized soybean oil and benzyl epoxystearate.

When a polymer plasticizer is used, the initial physical properties can be maintained for a long period of time compared with when a low-molecular-weight plasticizer is used which is a plasticizer containing no polymer moiety in the molecule. Furthermore, the drying properties (also referred to as coating properties) of an alkyd coating material applied to the cured product can also be improved. Specific examples of the polymer plasticizers include, but not limited to, vinyl polymers obtained by polymerizing vinyl monomers by various methods; esters of polyalkylene glycols, such as diethylene glycol dibenzoate, triethylene glycol dibenzoate, and pentaerythritol esters; polyester plasticizers prepared from dibasic acids (e.g., sebacic acid, adipic acid, azelaic acid, phthalic acid) and divalent alcohols (e.g., ethylene glycol, diethylene glycol, triethylene glycol, propylene glycol, dipropylene glycol); polyoxyalkylene polymers such as polyether polyols (e.g., polyethylene glycol, polypropylene glycol, and polytetramethylene glycol) which have a molecular weight of 500 or higher, or even a molecular weight of 1000 or higher, and derivatives thereof obtained by converting the hydroxyl groups of these polyether polyols into ester groups, ether groups, amino groups or other groups; polystyrenes such as polystyrene and poly-α-methylstyrene; polybutadiene, polybutene, polyisobutylene, polybutadiene-acrylonitrile, and polychloroprene.

Among these polymer plasticizers, those which are compatible with the polymer (A) are in particular the polyoxyalkylene polymer and a vinyl polymer. In terms of moisture permeability, surface curability, depth curability, and storage stability, the polyoxyalkylene polymer (B1) is useful and it is comprised in the curable composition in the building exterior material of claim 1.

In terms of compatibility, weather resistance and heat resistance, vinyl polymers are preferred. Among vinyl polymers, acrylic polymers and/or methacrylic polymers are preferred, and acrylic polymers such as polyalkyl acrylates are more preferred. The polymers may preferably be synthesized by living radical polymerization, more preferably atom transfer radical polymerization, because these methods allow production of polymers having a narrow molecular weight distribution and low viscosity. Also preferred are polymers obtained by the continuous bulk polymerization of an alkyl acrylate monomer at high temperature and high pressure, that is, by the SGO process, as described in JP-A 2001-207157.

The polymer plasticizer preferably has a number average molecular weight of 300 to 15,000, more preferably 500 to 10,000, still more preferably 700 to 8, 000, particularly preferably 800 to 5,000, and most preferably 1,000 to 3,000. If the molecular weight is too low, the plasticizer exudes due to heat or rain over time so that the initial physical properties cannot be maintained for a long period of time, and the alkyd coating properties cannot be improved. If the molecular weight is too high, the viscosity becomes high and the workability is deteriorated. The molecular weight distribution of the polymer plasticizer is not particularly limited, and is preferably narrow; the molecular weight distribution is preferably less than 1.80, more preferably not more than 1.70, still more preferably not more than 1.60, even more preferably not more than 1.50, particularly preferably not more than 1.40, and most preferably not more than 1.30.

The number average molecular weight is measured by the GPC method in the case of a vinyl polymer, and is measured by the terminal group analysis in the case of a polyoxyalkylene polymer. Also, the molecular weight distribution (Mw/Mn) is measured by the GPC method (relative to polystyrene standards).

Although the polyoxyalkylene polymer (B1) may contain a reactive silyl group, it may preferably be a polyoxyalkylene polymer having no reactive silyl group in terms of depth curability.

The polyoxyalkylene polymer (B1) contains an oxyethylene repeating unit in a backbone skeleton in terms of water vapor permeability. The weight of the oxyethylene repeating unit in the component (B1) is preferably 1 to 80% by weight, more preferably 5 to 60% by weight, still more preferably 10 to 50% by weight, particularly preferably 20 to 45% by weight, and most preferably 30 to 40% by weight of the total weight of the component (B1). When the weight is less than 1%, an undesirable trend appears with regard to water vapor permeability; when it exceeds 80%, an undesirable trend appears with regard to workability due to the resulting high viscosity.

Meanwhile, the polyoxyalkylene polymer (B1) preferably further contains an oxypropylene repeating unit in the backbone skeleton because a plasticizer to be obtained is noncrystalline and has a relatively low viscosity. The weight of the oxypropylene repeating unit in the component (B1) is preferably 10% by weight or more, more preferably 20% by weight or more, still more preferably 30% by weight or more, particularly preferably 40% by weight or more, and most preferably 50% by weight or more of the total weight of the component (B1). When the weight is less than 10%, an undesirable trend appears with regard to workability due to the resulting high viscosity.

The oxyalkylene repeating unit constituting the backbone skeleton of the polyoxyalkylene polymer (B1) preferably consists only of oxyethylene and oxypropylene. In that case, the weight ratio of the oxyethylene and oxypropylene repeating units is more preferably 10/90 to 70/30, particularly preferably 20/80 to 60/40, and most preferably 30/70 to 50/50. When the weight ratio of the oxyethylene and oxypropylene repeating units is smaller than 10/90, an undesirable trend appears with regard to water vapor permeability; when it is more than 80/20, an undesirable trend appears with regard to workability due to the resulting high viscosity.

Examples of the method for synthesizing a polyoxyalkylene polymer (B1) include, but not limited to, a polymerization method using an alkali catalyst such as KOH; a polymerization method using a transition metal compound-porphyrin complex catalyst such as a complex obtained by reaction between an organoaluminum compound and a porphyrin, as disclosed in JP-A S61-215623; a polymerization method using a double metal cyanide complex catalyst, as disclosed in JP-B S46-27250 and JP-B S59-15336 and US Patent Nos. 3,278,457, 3,278,458, 3,278,459, 3,427,256, 3,427,334 and 3,427,335, and other documents; a polymerization method using a catalyst containing a polyphosphazene salt, as disclosed in JP-A H10-273512; and a polymerization method using a catalyst containing a phosphazene compound, as disclosed in JP-A H11-060722.

A single plasticizer which is the polyoxyalkylene polymer may be used alone, or two or more plasticizers may be used in combination. Also, a low-molecular-weight plasticizer and a polymer plasticizer may be used in combination. The plasticizer may also be added at the time of polymer production.

The amount of the plasticizer to be used for each 100 parts by weight of the polymer (A) is 5 to 150 parts by weight, preferably 10 to 120 parts by weight, and more preferably 20 to 100 parts by weight. If the amount is less than 5 parts by weight, the effect of the plasticizer cannot be obtained. If the amount is more than 150 parts by weight, the mechanical strength of the cured product is insufficient.

Various additives other than the component (A) and the component (B) will be described below.

### <<Curable Composition>>

The curable composition of the present invention can contain various additives other than the component (A) and the component (B), depending on the desired physical properties.

### <Curing Catalyst>

The curable composition of the present invention can contain a curing catalyst. Specific examples thereof include metal salts of carboxylic acids such as tin 2-ethylhexanoate, tin versatate, and bismuth 2-ethylhexanoate; carboxylic acids such as 2-ethylhexane acid and versatic acid; tetravalent organotin compounds such as dibutyltin dilaurate, dibutyltin maleate, dibutyltin phthalate, dibutyltin dioctanoate, dibutyltin bis(2-ethylhexanoate), dibutyltin bis(methyl maleate), dibutyltin bis (ethyl maleate), dibutyltin bis (butyl maleate), dibutyltin bis(octyl maleate), dibutyltin bis(tridecyl maleate), dibutyltin bis(benzyl maleate), dibutyltin diacetate, dioctyltin bis(ethyl maleate), dioctyltin bis(octyl maleate), dibutyltin dimethoxide, dibutyltin bis(nonylphenoxide), dibutenyltin oxide, dibutyltin bis(acetylacetonate), dibutyltin bis(ethyl acetoacetate), reaction products of dibutyltin oxide and a silicate compound, reaction products of dialkyltin dicarboxylate such as dibutyltin dilaurate and a silicate compound, and reaction products of dibutyltin oxide and a phthalic acid ester; organic titanates such as tetraisopropoxy titanium, tetra n-butoxy titanium, diisopropoxytitanium bis(acetylacetonate), and diisopropoxytitanium bis(ethyl acetoacetate); organo-aluminum compounds such as aluminum tris(acetylacetonate), aluminum tris (ethyl acetoacetate), and diisopropoxyaluminum ethyl acetoacetate; zirconium compounds such as zirconium tetrakis(acetylacetonate); aliphatic primary amines such as methylamine, ethylamine, propylamine, isopropylamine, butylamine, amylamine, hexylamine, octylamine, 2-ethylhexylamine, nonylamine, decylamine, laurylamine, pentadecylamine, cetylamine, stearylamine, and cyclohexylamine; aliphatic secondary amines such as dimethylamine, diethylamine, dipropylamine, diisopropylamine, dibutylamine, diamylamine, dihexylamine, dioctylamine, bis(2-ethylhexyl)amine, didecylamine, dilaurylamine, dicetylamine, distearylamine, methylstearylamine, ethylstearylamine, and butylstearylamine; aliphatic tertiary amines such as triamylamine, trihexylamine, and trioctylamine; aliphatic unsaturated amines such as triallylamine and oleylamine; aromatic amines such as laurylaniline, stearylaniline, and triphenylamine; and other amines such as monoethanolamine, diethanolamine, triethanolamine, 3-hydroxypropylamine, diethylenetriamine, triethylenetetramine, benzylamine, 3-methoxypropylamine, 3-lauryloxypropylamine, 3-dimethylaminopropylamine, 3-diethylaminopropylamine, xylylenediamine, ethylenediamine, hexamethylenediamine, triethylenediamine, guanidine, diphenylguanidine, 2,4,6-tris(dimethylaminomethyl)phenol, morpholine, N-methylmorpholine, 2-ethyl-4-methylimidazole, 1,8-diazabicyclo(5,4,0)undecene-7 (DBU), and 1,5-diazabicyclo(4,3,0)nonene--5 (DBN).

The curing catalyst is used in the range of 0.01 to 10 parts by weight, preferably in the range of 0.1 to 7 parts by weight, and more preferably in the range of 0.5 to 4 parts by weight, for each 100 parts by weight of the component (A).

### <Silane Coupling Agent>

The curable composition of the present invention can contain a silane coupling agent. Specific examples thereof include isocyanato group-containing silanes such as γ-isocyanatopropyltrimethoxysilane, γ-isocyanatopropyltriethoxysilane, γ-isocyanatopropylmethyldiethoxysilane, γ-isocyanatopropylmethyldimethoxysilane, (isocyanatomethyl)trimethoxysilane, (isocyanatomethyl)dimethoxymethylsilane, (isocyanatomethyl)triethoxysilane, and (isocyanatomethyl)diethoxymethylsilane; amino group-containing silanes such as γ-aminopropyltrimethoxysilane, γ-aminopropyltriethoxysilane, γ-aminopropyltriisopropoxysilane, γ-aminopropylmethyldimethoxysilane, γ-aminopropylmethyldiethoxysilane, γ-(2-aminoethyl)aminopropyltrimethoxysilane, γ-(2-aminoethyl)aminopropylmethyldimethoxysilane, γ-(2-aminoethyl)aminopropyltriethoxysilane, γ-(2-aminoethyl)aminopropylmethyldiethoxysilane, γ-(2-aminoethyl)aminopropyltriisopropoxysilane, γ-(6-aminohexyl)aminopropyltrimethoxysilane, 3-(N-ethylamino)-2-methylpropyltrimethoxysilane, γ-ureidopropyltrimethoxysilane, γ-ureidopropyltriethoxysilane, N-phenyl-γ-aminopropyltrimethoxysilane, N-benzyl-γ-aminopropyltrimethoxysilane, N-vinylbenzyl-γ-aminopropyltriethoxysilane, N-cyclohexylaminomethyltriethoxysilane, N-cyclohexylaminomethyldiethoxymethylsilane, N-phenylaminomethyltrimethoxysilane, (2-aminoethyl)aminomethyltrimethoxysilane, and N,N'-bis[3-(trimethoxysilyl)propyl]ethylenediamine; ketimine-type silanes such as N-(1,3-dimethylbutylidene)-3-(triethoxysilyl)-1-propaneamine; mercapto group-containing silanes such as γ-mercaptopropyltrimethoxysilane, γ-mercaptopropyltriethoxysilane, γ-mercaptopropylmethyldimethoxysilane, γ-mercaptopropylmethyldiethoxysilane, mercaptomethyltrimethoxysilane, and mercaptomethyltriethoxysilane; epoxy group-containing silanes such as γ-glycidoxypropyltrimethoxysilane, γ-glycidoxypropyltriethoxysilane, γ-glycidoxypropylmethyldimethoxysilane, β-(3,4-epoxycyclohexyl)ethyltrimethoxysilane, and β-(3,4-epoxycyclohexyl)ethyltriethoxysilane; carboxysilanes such as β-carboxyethyltriethoxysilane, β-carboxyethylphenylbis(2-methoxyethoxy)silane, and N-β-(carboxymethyl)aminoethyl-γ-aminopropyltrimethoxysilane ; vinylically unsaturated group-containing silanes such as vinyltrimethoxysilane, vinyltriethoxysilane, γ-methacryloyloxypropylmethyldimethoxysilane, γ-acryloyloxypropyltriethoxysilane, and methacryloyloxymethyltrimethoxysilane; halogen-containing silanes such as γ-chloropropyltrimethoxysilane; and isocyanurate silanes such as tris(3-trimethoxysilylpropyl)isocyanurate. Derivatives obtained by modifying the above substances, such as amino-modified silyl polymers, silylated amino polymers, unsaturated aminosilane complexes, phenylamino-long chain alkyl-silanes, aminosilylated silicones, and silylated polyesters, can also be used as the silane coupling agents. Examples of reaction products of the silane coupling agents include reaction products of any of the above aminosilanes and any of the above epoxysilanes, reaction products of any of the above aminosilanes and any of the above isocyanatosilanes, and partial condensates of the silane coupling agents.

The amount of the silane coupling agent is preferably 0.1 to 15 parts by weight, more preferably 1 to 10 parts by weight, and particularly preferably 3 to 7 parts by weight, for each 100 parts by weight of the component (A). If the amount to be added is less than this range, the adhesiveness and the storage stability may not be sufficient. Conversely, if the amount to be added exceeds the range, the depth curability may not be sufficient.

### <Filler>

A filler may be added into the curable composition of the present invention. Examples of the filler include reinforcing fillers such as fumed silica, precipitated silica, crystalline silica, fused silica, dolomite, silicic anhydride, hydrous silicic acid, and carbon black; fillers such as heavy calcium carbonate, colloidal calcium carbonate, magnesium carbonate, diatomite, calcined clay, clay, talc, titanium oxide, bentonite, organobentonite, ferric oxide, fine aluminum powder, flint powder, zinc oxide, activated zinc white, shirasu balloons, glass microballoons, organic microballoons of a phenol resin or a vinylidene chloride resin, and resin powders such as PVC powder and PMMA powder; and fibrous fillers such as asbestos, glass fiber and filaments. Among these, heavy calcium carbonate or colloidal calcium carbonate is preferred because of its cost and viscosity.

When a filler is used, the amount to be used is preferably 1 to 250 parts by weight, and more preferably 10 to 200 parts by weight, for each 100 parts by weight of the polymer (A). Also, since the filler tends to decrease the water vapor permeation rate of the coating film, the amount to be used is preferably 10 parts by weight or less, and more preferably 1 part by weight or less, for each 100 parts by weight of the polymer (A). Still more preferably, substantially no filler is used.

### <Anti-sagging agent>

The curable composition of the present invention may optionally incorporate a thixotropic agent (anti-sagging agent) to prevent sagging and improve the workability. Examples of the anti-sagging agent include, but not limited to, polyamide waxes, hydrogenated castor oil derivatives, and metal soaps such as calcium stearate, aluminum stearate, and barium stearate. Use of powdery rubber having a particle size of 10 to 500 µm as disclosed in JP-A H11-349916 or organic fibers as disclosed in JP-A 2003-155389 enables to obtain a composition that is highly thixotropic and has good workability. Each of these thixotropic agents (anti-sagging agents) may be used alone, or two or more of these may be used in combination. The thixotropic agent is used in the range of 0.1 to 20 parts by weight for each 100 parts by weight of the reactive silyl group-containing polymer (A).

### <Various additives as others>

The curable composition of the present invention may optionally incorporate various additives. Examples of the additives include photo-curable substances, oxygen-curable substances, antioxidants, light stabilizers, ultraviolet absorbers, epoxy resins, epoxy resin curing agents, flame retarders, solvents, curability modifiers, radical inhibitors, metal deactivators, antiozonants, phosphorus-containing peroxide decomposers, lubricants, pigments, blowing agents, repellents for ants, and antifungal agents. Each of these various additives may be used alone, or two or more of these may be used in combination. Specific examples of the various additives are described in, for example, JP-B H04-69659, JP-B H07-108928, JP-A S63-254149, JP-A S64-22904, JP-A 2001-72854, and JP-A 2008-303650.

### <Preparation Method of Curable Composition>

The curable composition of the present invention can be prepared as a one-pack formulation which is prepared by mixing all the formulation components and storing the mixture in a hermetically closed vessel in advance, and after application, is curable by moisture in the air. Also, the curable composition can be prepared as a two-pack formulation in which a mixture of components including a curing catalyst, filler, plasticizer, and water is separately prepared as a curing agent, and then the mixture and the base mixture of the curable composition are mixed just before use. In terms of workability, the one-pack formulation is preferred.

In the case where the curable composition is prepared as the one-pack formulation, since all the formulation components are mixed in advance, it is preferable that the water-containing formulation components be dehydrated and dried prior to use, or be dehydrated during mixing and kneading by, for example, the application of reduced pressure. In the case where the curable composition is prepared as a two-pack formulation, since the curing catalyst needs not be mixed into the base mixture that contains the reactive silyl group-containing organic polymer, gelation is less likely even when a small amount of water remains in the mixture. However, dehydration and drying are preferably performed when long-term storage stability is required. The method for dehydration and drying is suitably, in the case of a solid such as powder, thermal drying, and, in the case of a liquid, dehydration under reduced pressure or dehydration using, for example, synthetic zeolite, active alumina, silica gel, quick lime, or magnesium oxide. The composition may be mixed with a small amount of an isocyanato compound such that an isocyanato group and water are reacted for dehydration. The composition may be mixed with an oxazolidine compound such as 3-ethyl-2-methyl-2-(3-methylbutyl)-1,3-oxazolidine so that the compound is reacted with water for dehydration. The storage stability can be improved by adding lower alcohols such as methanol and ethanol; and an alkoxysilane compound such as n-propyltrimethoxysilane, vinyltrimethoxysilane, vinylmethyldimethoxysilane, methyl silicate, ethyl silicate, γ-mercaptopropylmethyldimethoxysilane, γ-mercaptopropylmethyldiethoxysilane, and γ-glycidoxypropyltrimethoxysilane, in addition to these methods for dehydration and dying.

The amount of the dehydrating agent, particularly a silicon compound reactive with water (e.g. vinyltrimethoxysilane), to be used is preferably in the range of 0.1 to 20 parts by weight, and more preferably 0.5 to 10 parts by weight, for each 100 parts by weight of the reactive silyl group-containing polyoxyalkylene polymer (A).

The curable composition of the present invention can be prepared by any methods including commonly used methods such as a method in which the aforementioned components are mixed and kneaded at room temperature or under heating by a mixer, roller, kneader or the like; and a method in which the components are dissolved in a small amount of an appropriate solvent and then mixed.

When exposed to the air, the curable composition of the present invention forms a three-dimensional network structure by the action of moisture, so as to be cured into a rubbery cured product.

The reactive silyl group-containing polymer as the component (A) of the present invention has a relatively low viscosity. Thus, a composition which can be applied as a non-aqueous type and/or non-solvent type (or as a high solid type with a small amount of solvent) is easily designed. Since an aqueous emulsion composition has a problem in that it needs a long time for forming a coating film at low temperatures or high humidity and is difficult to apply under cold conditions, the curable composition of the present invention is preferably a non-aqueous curable composition. Also, from the viewpoint of reducing the environmental load, the curable composition of the present invention is preferably a non-solvent type (or high solid type) curable composition.

In the case of a non-aqueous curable composition, the water content in the curable composition of the present invention is preferably 10 parts by weight or less, more preferably 1 part by weight or less, and still more preferably 0.1 parts by weight or less, for each 100 parts by weight of the component (A) ; and most preferably, the curable composition contains substantially no water. If the water content exceeds this range, the storage stability tends to be reduced and the properties of the coating film may deteriorate.

In the case of a non-solvent type curable composition, the solvent content in the curable composition of the present invention is preferably 10 parts by weight or less, more preferably 5 parts by weight or less, still more preferably 1 part by weight or less, and particularly preferably 0.1 parts by weight or less, for each 100 parts by weight of the component (A); and most preferably, the curable composition contains substantially no solvent. If the solvent content exceeds this range, a larger amount of VOCs tend to be present in the coating film formation and the environmental load tends to be greater.

The curable composition of the present invention is preferably of one-pack type in terms of easy application, and no risk of the deterioration of the performance of the coating film due to mixing failure or inappropriate mixing ratio, or the like.

### <Building exterior substrate>

A building exterior substrate to be coated with the curable composition of the present invention is not particularly limited. Specific examples thereof include inorganic substrates such as concrete, mortar, ALC, gypsum, a siding board, and a slate; wood-based substrates such as solid woods, plywoods, particle boards, oriented strand boards, fiberboards, lumber core boards, and laminated veneer lumbers; waterproof sheets such as asphalt, modified bitumen, EPDM, and TPO; organic substrates such as urethane foam heat-insulating materials; and metallic substrates such as metallic panels. Inorganic substrates and wood-based substrates are preferred because they cause the building exterior material of the present application to be more effective, and wood-based substrates are more preferred. Among the wood-based substrates, plywoods and oriented strand boards are still more preferred.

### <Thickness of Cured Product>

A coating film obtained by curing the curable composition of the present invention preferably has a thickness of 0.1 to 3.0 mm, more preferably 0.2 to 2.0 mm, still more preferably 0.3 to 1.0 mm, and particularly preferably 0.4 to 0.8 mm. If the coating film thickness is less than that range, the physical properties of the coating film such as long-term durability, waterproofness, and tear resistance tend to deteriorate. If the coating film thickness exceeds that range, the moisture permeability tends to be reduced, and the cost tends to be higher.

### <Application Method>

An application method for the curable composition of the present invention is not particularly limited. The curable composition can be applied by known coating methods such as a brush, a roller, an air sprayer, and an airless sprayer, as described in JP-A H10-298488.

### <Water Vapor Permeability (Moisture Permeability)>

The water vapor permeability of the coating film obtained by curing the curable composition of the present invention can be evaluated by the following method. The curable composition of the present invention is formed into a sheet with a uniform thickness, and then cured at a temperature of 23°C and relative humidity of 50% for 3 days, and further cured at 50°C for 4 days. The thickness of the obtained sheet-shaped cured product is measured using a micrometer, and a value of moisture permeation rate is then measured in a condition B (temperature: 40 ± 0.5°C, relative humidity: 90 ± 2%) according to a cup method of JIS Z0208. Herein, the value of moisture permeation rate depends on the characteristics of the used material and the thickness of the evaluated sheet. It is difficult to form sheets so as to have the identical thickness. Therefore, a value of [α × β × 0.209 × 10⁻¹⁰ (unit: g·cm/cm²·sec·cmHg) calculated from a value of moisture permeation rate [β] (unit: g/m²·24h) of the sheet-shaped cured product, and a value of thickness [α] (unit: mm) of the sheet-shaped cured product is defined as a value of water vapor permeability in the present invention, which represents the moisture permeability of the used material and is substantially independent of the thickness of the sheet.

The water vapor permeability of the coating film obtained by curing the curable composition of the present invention is preferably 70 × 10⁻¹⁰ g·cm/cm²·sec·cmHg or more, more preferably 80 × 10⁻¹⁰ g-cm/cm2-sec·cmHg or more, still more preferably 100 × 10⁻¹⁰ g·cm/cm²·sec·cmHg or more, particularly preferably 120 × 10⁻¹⁰ g·cm/cm²·sec·cmHg or more, and most preferably 150 × 10⁻¹⁰ g·cm/cm²·sec·cmHg or more. If the water vapor permeability of the coating film is lower than this range, the permeation of the water vapor from the coated substrate material is insufficient, which may cause problems such as the occurrence of dew condensation or fungi around the substrate material.

### <<Application>>

Since the reactive silyl group-containing polyoxyalkylene polymer and/or (meth)acrylate polymer as the component (A) have/has a relatively low viscosity, the building exterior material in which the curable composition of the present invention is applied to the building exterior substrate has high water vapor permeability and sufficient waterproofness to prevent penetration of water from the outside. Therefore, the curable composition of the present invention is useful as a waterproof coating material for buildings, and particularly useful as a moisture permeable waterproof coating material. The moisture permeable waterproof coating material refers to a waterproof coating material which is in liquid form before being cured and can be applied to a substrate by a brush, a spatula, a roller or the like, or applied by a spraying machine, to form and cure a film that forms a seamless waterproofing layer, and which can also discharge water from the substrate to the outside because the cured film thereof has water vapor permeability. The waterproof coating material has the following features (1) and (2): (1) the waterproof coating material forms a seamless coating film, and has high waterproof reliability without forming any seams; and (2) the waterproof coating material can also be applied to complicated-shaped regions.

Conventional moisture permeable waterproof sheets are frequently used for various commercial buildings, collective housings, and single-family houses and the like, and particularly for buildings based on an exterior wall ventilation method, as waterproof coating materials which are applied to exterior wall substrates to prevent penetration of bulk water such as rain water from the outside while discharging water vapor from the exterior wall materials to the outside to prevent dew condensation on the exterior wall materials due to their high moisture permeability and waterproofness. However, since pegs or adhesive tapes are used in the overlapped part of the moisture permeable waterproof sheets, water may enter from a gap between the adhesive tapes or a peg hole after a prolonged period, to cause damage to building base materials such as a steel frame or wood. Water vapor contained in the external air entering through the gap in the overlapped part of the moisture permeable waterproof sheets and water formed by the condensation of the water vapor also cause serious damage to the building base materials. Besides this, since the external air enters into the inside through the gap, the temperature inside the building is likely to be changed, thereby bringing about a decrease in the efficiency of temperature control, and energy loss. Since the curable composition of the present invention can be applied in liquid form, a seamless coating film can be easily formed, and the penetration of water or air from the outside can be sufficiently prevented. Therefore, the curable composition is particularly useful as a waterproof coating material for exterior wall substrates of buildings.

After the curable composition of the present invention is applied to an exterior wall substrate and cured, various exterior finishing materials are applied. The exterior finishing method is not particularly limited. In the case of, for example, an internal insulation method, the following method is preferred: applying the curable composition of the present invention to the exterior wall substrates, curing the curable composition, and applying a stucco, a coating material, a brick, a tile, a stone material, a siding board, and a metallic panel or the like to perform finishing. In the case of an external insulation method, the following method is preferred: applying the curable composition of the present invention to the exterior wall substrate, curing the curable composition, laying a heat insulation board, and applying a stucco, a coating material, a brick, a tile, a stone material, a siding board, a metallic panel or the like to perform finishing.

Since a periphery of an opening (a lower end of a sash and a surrounding area of a window frame or the like) of a building such as a window or a door has a complicated shape, waterproofing the periphery of an opening is highly difficult, and many of the complaints of water leakage are about the periphery of an opening. Since the curable composition according to the present invention can be applied in liquid form, the curable composition can easily conform to complicated shapes, and the cured film thereof shows sufficient waterproofness and moisture permeability. Therefore, the curable composition is particularly useful as a moisture permeable waterproof coating material for a periphery of an opening of a building. The curable composition of the present invention is also useful for a periphery of a duct, a wall handrail, and a handrail corner or the like.

After the curable composition of the present invention is applied to a periphery of an opening of a building and cured, various windows, doors, ducts or the like are incorporated into the opening.

Further, since the curable composition of the present invention forms the coating film having no seam and has high waterproof reliability, the curable composition is particularly useful as a moisture permeable waterproof coating material for roofs requiring high waterproofing performance. The moisture permeable waterproof coating material for building roofs is applied to substrate materials for roofs such as roofing boards.

As described above, (1) the curable composition of the present invention prevents the penetration of bulk water such as rain water from the outside while discharging water vapor from a building exterior substrate to the outside, to effectively function as a waterproof coating material preventing dew condensation on an exterior material because the cured film has high water vapor permeability; and (2) the curable composition can also be applied to a complicated-shaped region to form a seamless coating film having high waterproof reliability because the curable composition can be used as a waterproof coating material with favorable workability.

Therefore, the use of the building exterior material in which the curable composition of the present invention is applied to a building exterior substrate can effectively waterproof the building, and is thus excellent as a means for waterproofing a building.

Particularly, the building exterior material of the present invention can be suitably used for exterior walls, that is, it can be used as a building exterior wall material because the present invention can then be remarkably effective.

As described above, the use of the building exterior material of the present invention on a wall surface can allow water remaining on the substrate material side to escape to the outside, and can prevent pollution of indoor air caused by the occurrence of fungi and deterioration of buildings due to corrosion of wood or steel frame. Therefore, the building exterior material of the present invention is excellent as a means for waterproofing an exterior wall of a building.

Since the curable composition of the present invention can waterproof complicated-shaped regions such as a periphery of an opening of a building without seams and gaps, the building exterior material of the present invention is excellent as a means for waterproofing a periphery of an opening of a building.

Further, since the curable composition of the present invention can perform waterproofing without seams and gaps, the curable composition is effective for roofs requiring particularly high waterproofness, and the building exterior material of the present invention is excellent as a means for waterproofing a roof of a building.

### EXAMPLES

The present invention is specifically described referring to the following examples and comparative examples, wherein Examples 3 and 5 are examples according to the present invention and Examples 1, 2 and 4 are reference examples.

In the following synthesis examples, a "number average molecular weight" was calculated by a standard polystyrene equivalent method using gel permeation chromatography (GPC). Measurement was done using a TOSOH model HLC-8120 GPC solvent delivery system, a TOSOH model TSK-GEL H type column, and THF as the solvent.

Synthesis examples of a vinyl polymer in the present invention will be described below.

### (Synthesis Example 1)

91.3 g of Newpol PE-64 (manufactured by Sanyo Chemical Industries, Ltd., polyoxyethylene polyoxypropyleneglycol in which a molar ratio of an oxyethylene repeating unit and an oxypropylene repeating unit is 25/30, hydroxyl value = 36), and 8.7 g of isophorone diisocyanato were reacted at 100°C for 5 hours using 0.01 g of NEOSTANN U-360 (manufactured by Nitto Kasei Co., Ltd., S group-containing organotin compound) as a catalyst, to obtain a urethane prepolymer. Then, the urethane prepolymer was cooled to 50°C, and 3.9 g of γ-aminopropyltriethoxysilane (manufactured by Momentive Performance Materials Inc.) was added thereto. The mixture was reacted at 100°C for 5 hours, and the disappearance of an isocyanato absorption band was confirmed in IR spectrum. The number average molecular weight of the obtained triethoxysilyl group-terminated polyoxyalkylene polymer (A-1) was 6,370. The weight of the oxyethylene repeating unit was 35% by weight of the total weight of the obtained polymer (A-1). The weight of the oxypropylene repeating unit was 56% by weight of the total weight of the obtained polymer (A-1).

### (Synthesis Example 2)

44.8 g of Newpol PE-64, 44.8 g of Sannix PP-2000 (manufactured by Sanyo Chemical Industries, Ltd., polyoxypropyleneglycol, hydroxyl value = 56), and 10.4 g of isophorone diisocyanato were reacted at 100°C for 5 hours using 0.01 g of NEOSTANN U-360 as a catalyst, to obtain a urethane prepolymer. Then, the urethane prepolymer was cooled to 50°C, and 3.9 g of γ-aminopropyltriethoxysilane was added thereto. The mixture was reacted at 100°C for 5 hours, and the disappearance of an isocyanato absorption band was confirmed in IR spectrum. The number average molecular weight of the obtained triethoxysilyl group-terminated polyoxyalkylene polymer (A-2) was 6,400. The weight of the oxyethylene repeating unit was 17% by weight of the total weight of the obtained polymer (A-2). The weight of the oxypropylene repeating unit was 72% by weight of the total weight of the obtained polymer (A-2).

### (Comparative Synthesis Example 1)

88.0 g of Sannix PP-2000 and 12.0 g of isophorone diisocyanato were reacted at 100°C for 5 hours using 0.01 g of NEOSTANN U-360 as a catalyst, to obtain a urethane prepolymer. Then, the urethane prepolymer was cooled to 50°C, and 3.9 g of γ-aminopropyltriethoxysilane was added thereto. The mixture was reacted at 100°C for 5 hours, and the disappearance of an isocyanato absorption band was confirmed in IR spectrum. The number average molecular weight of the obtained triethoxysilyl group-terminated polyoxyalkylene polymer (A-3) was 6,610. The weight of the oxypropylene repeating unit was 88% by weight of the total weight of the obtained polymer (A-3).

### (Comparative Synthesis Example 2)

88.0 g of PEG-2000 (manufactured by Sanyo Chemical Industries, Ltd., polyoxyethyleneglycol, hydroxyl value = 56) and 12.0 g of isophorone diisocyanato were reacted at 100°C for 5 hours using 0.01 g of NEOSTANN U-360 as a catalyst, to obtain a urethane prepolymer. Then, the urethane prepolymer was cooled to 50°C, and 3.9 g of γ-aminopropyltriethoxysilane was added thereto. The mixture was reacted at 100°C for 5 hours to obtain a polymer. The obtained polymer was in solid form at room temperature, and was hard to handle. The weight of the oxyethylene repeating unit was 88% by weight of the total weight of the obtained polymer.

### (Examples 1 to 5, Comparative Examples 1 to 3)

The component (A), plasticizer, dehydrating agent, adhesion-imparting agent, and curing catalyst or the like were weighed in accordance with the formulation shown in Table 1, and were kneaded by a mixer under dehydration conditions with substantially no moisture. Thereafter, the mixture was hermetically packed in a moisture-proof container, whereby a one-pack curable composition was obtained. When used, each of the one-pack compositions in Table 1 was discharged from each container to make the later-described evaluations.

The following additives other than the component (A) were used.
<Plasticizer> Jayflex DINP (manufactured by ExxonMobil Chemical Company, diisononylphthalate), Sannix PP-1000 (manufactured by Sanyo Chemical Industries, Ltd., polyoxypropyleneglycol, number average molecular weight: 1,000), Newpol 50HB-260 (manufactured by Sanyo Chemical Industries, Ltd., polyoxyethylene polyoxypropylene monobutyl ether monool in which a molar ratio of an oxyethylene repeating unit and an oxypropylene repeating unit is 10/7)
<Dehydrating Agent> A-171 (manufactured by Momentive Performance Materials Inc., vinyltrimethoxysilane)
<Adhesion-Imparting Agent> A-1120 (manufactured by Momentive Performance Materials Inc., N-(β-aminoethyl)-γ-aminopropyltrimethoxysilane)
<Curing Catalyst> NEOSTANN U-220H (manufactured by Nitto Kasei Co., Ltd., dibutyltin bisacetylacetonate) (Migration of Plasticizer to Surface of Coating Film after Curing)

Each composition of Table 1 was applied onto a tetrafluoroethylene film, and was adjusted by a spacer and a plain spatula so as to give a thickness of about 1 mm. The resulting composition was then cured in a constant temperature and humidity room (23°C/50%RH) for 3 days and then in an oven of 50°C for 4 days to obtain a cured product as a coating film. The cured product was left at 40°C and 90%RH for 24 hours to evaluate the migration of the plasticizer to the surface of the coating film by visual observation and finger touching. Table 1 shows the results.

### (Tensile Test of Cured Film)

Each composition of Table 1 was poured into a polyethylene mold carefully so that no bubbles were included therein. The poured composition was cured at 23°C for 3 days and then at 50°C for 4 days to obtain a cured film having a thickness of 2 mm. No. 3 dumbbell-shaped specimens were punched out from the obtained cured film and subjected to a tensile test at 23°C/50%RH (tensile speed: 200 mm/min) to determine the 100% modulus (M100), strength at break (Tb), and elongation at break (Eb). Table 1 shows the results.

### (Moisture Permeability of Cured Film)

Each composition of Table 1 was applied onto a tetrafluoroethylene film, and the thickness thereof was adjusted by a spacer and a plain spatula. Thereafter, the resulting composition was cured in a constant temperature and humidity room (23°C/50%RH) for 3 days, and then in an oven of 50°C for 4 days, to prepare a coating film having a thickness shown in Table 1. The thickness of the obtained coating film was measured to evaluate a moisture permeation rate according to JIS Z0208. A water vapor permeation coefficient (unit: g·cm/cm²·sec·cmHg) was calculated according to the following formula from a value of coating film thickness (A, unit: mm) and a value of moisture permeation rate (B, unit: g/m²·24h). <Water Vapor Permeation Coefficient> = <Thickness> × <Moisture Permeation Rate> × 0.209 × 10⁻¹⁰
Table 1 shows the results.

**[Table 1]**

| Composition (part(s) by weight) | | Example | | | | | | | Comparative Example | | |
|---|---|---|---|---|---|---|---|---|---|---|---|
| | | 1 | 2 | | 3 | | 4 | 5 | 1 | 2 | 3 |
| Polyoxyalkylene polymer | A-1 | 100 | 100 | | 100 | | | | | | |
| | A-2 | | | | | | 100 | 100 | | | |
| | A-3 | | | | | | | | 100 | 100 | 100 |
| Plasticizer | DINP | 50 | | | | | | | 50 | | |
| | Sannix PP-1000 | | 50 | | | | 50 | | | 50 | |
| | Newpol 50HB-260 | | | | 50 | | | 50 | | | 50 |
| Dehydrating agent | A-171 | 3 | 3 | | 3 | | 3 | 3 | 3 | 3 | 3 |
| Adhesion-imparting agent | A-1120 | 3 | 3 | | 3 | | 3 | 3 | 3 | 3 | 3 |
| Curing catalyst | NEOSTANN U-220H | 1 | 1 | | 1 | | 1 | 1 | 1 | 1 | 1 |
| Migration of plasticizer to the coating film surface after curing | | Not found | Not found | Not found | Not found | Not found | Not found | Not found | Not found | Not found | Found |
| Properties of coating film | M100 (Mpa) | 0.41 | 0.42 | | 0.38 | | 0.40 | 0.37 | 0.42 | 0.41 | 0.37 |
| | Tb (Mpa) | 1.13 | 1.34 | | 1.02 | | 0.87 | 0.91 | 0.93 | 0.95 | 0.88 |
| | Eb (%) | 289 | 325 | | 298 | | 234 | 273 | 223 | 233 | 249 |
| Thickness of coating film | (mm) | 2.69 | 2.34 | 0.53 | 2.40 | 0.47 | 2.09 | 2.26 | 1.88 | 2.00 | 2.39 |
| Moisture permeation rate (JIS Z-0208) | (g/m²·24h) | 136 | 259 | 1120 | 388 | 1920 | 201 | 277 | 89 | 147 | 195 |
| Water vapor permeation coefficient × 10¹⁰ | (g·cm/cm²·sec·cmHg) | 76 | 126 | 124 | 195 | 189 | 88 | 131 | 35 | 61 | 97 |

As shown in Table 1, all the coating films obtained by curing the curable compositions of Examples 1 to 5 using A-1 and A-2 as a polyoxyalkylene polymer containing an oxyethylene repeating unit in a backbone skeleton had a high water vapor permeation coefficient. In contrast, the coating films obtained by curing the curable compositions of Comparative Examples 1 to 3 using A-3 as the polyoxyalkylene polymer containing no oxyethylene repeating unit in a backbone skeleton had a low water vapor permeation coefficient or showed migration of the plasticizer to the surface of the coating film after curing. For values of tensile physical properties, the cured films of Examples 1 to 3 using A-1 had higher Tb.

Next, each of compositions of Examples 1 to 5 and Comparative Examples 1 and 2 was applied onto the whole area of one side of a wood-based substrate having a thickness of 5 mm so as to give a thickness of 0.5 mm, and was cured at 23°C/50%RH for 3 days, and then at 50°C for 4 days, to prepare a building exterior material. The same amount of water was applied onto surfaces to be applied of the obtained wall materials so as to be wet the surfaces. The applied surface was covered with a glass plate having the same size as that of the wall material. The wall material and the glass plate were fixed by a clip, and the surrounding area of the end part thereof was sealed by a non-moisture permeable sealing material. The obtained wall material/glass laminated body was left to stand in a constant temperature and humidity room (23°C/50%RH) such that the applied surface faces upward. The dry state of a plywood was confirmed through glass with time. As a result, it was confirmed that the wall material in which the composition having a higher water vapor permeation coefficient calculated in Table 1 is applied is dried in a shorter time.

### INDUSTRIAL APPLICABILITY

Since the reactive silyl group-containing polyoxyalkylene polymer and/or (meth)acrylate polymer as the component (A) have/has a relatively low viscosity, the building exterior material in which the curable composition according to the present invention is applied to a building exterior substrate has high water vapor permeability and sufficient waterproofness to prevent the penetration of water from the outside. Therefore, the curable composition of the present invention is useful as a waterproof coating material for buildings, and particularly useful as a moisture permeable waterproof coating material.

## Claims

1. A building exterior material, comprising a building exterior substrate coated with a curable composition comprising an organic polymer (A) containing a silicon-containing group capable of being cross-linked by forming a siloxane bond and a plasticizer (B),
wherein the organic polymer (A) is at least one of:
a polyoxyalkylene polymer (A1) containing an oxyethylene repeating unit in a backbone skeleton, a weight of the oxyethylene repeating unit in the component (A1) being 1 to 80% by weight of the total weight of the component (A1), and
a (meth)acrylate polymer (A2) containing an oxyethylene repeating unit at a side chain, a weight of the oxyethylene repeating unit in the component (A2) being 1 to 50% by weight of the total weight of the component (A2),
the plasticizer (B) is a polyoxyalkylene polymer (B1), containing an oxyethylene repeating unit in a backbone skeleton, and
the curable composition is cured into a cured product having a thickness of 0.1 to 3.0 mm.

2. The building exterior material according to claim 1, wherein a weight of the oxyethylene repeating unit in the component (B1) is 1 to 80% by weight of the total weight of the component (B1).

3. The building exterior material according to claim 1 or 2, wherein the polyoxyalkylene polymer (B1) comprises oxyethylene and oxypropylene as oxyalkylene repeating units constituting a backbone skeleton, and a weight ratio of the oxyethylene and oxypropylene repeating units is 10/90 to 80/20.

4. The building exterior material according to any one of claims 1 to 3, wherein the plasticizer (B) has a number average molecular weight measured by the terminal group analysis of 300 to 15000.

5. The building exterior material according to any one of claims 1 to 4, wherein the polyoxyalkylene polymer (A1) contains an oxyethylene repeating unit and an oxypropylene repeating unit; a weight of the oxyethylene repeating unit in the component (A1) is 1 to 80% by weight of the total weight of the component (A1); and a weight of the oxypropylene repeating unit in the component (A1) is 1 to 95% by weight of the total weight of the component (A1).

6. The building exterior material according to any one of claims 1 to 5, wherein the polyoxyalkylene polymer (A1) consists only of oxyethylene and oxypropylene as oxyalkylene repeating units constituting a backbone skeleton, and a weight ratio of the oxyethylene and oxypropylene repeating units is 5/95 to 80/20.

7. The building exterior material according to any one of claims 1 to 6, wherein the building exterior substrate is a wood-based substrate or an inorganic substrate.

8. The building exterior material according to claim 7, wherein the wood-based substrate is at least one selected from the group consisting of solid woods, plywoods, particle boards, oriented strand boards, fiberboards, lumber core boards, and laminated veneer lumbers.

9. The building exterior material according to claim 7, wherein the inorganic substrate is at least one selected from the group consisting of concrete, mortar, ALC, gypsum, siding boards, and slates.

10. A building exterior wall material, comprising the building exterior material according to any one of claims 1 to 9.

11. A method for waterproofing a building using the building exterior material according to any one of claims 1 to 9.

12. A method for waterproofing an exterior wall of a building using the building exterior material according to any one of claims 1 to 9.

13. A method for waterproofing a periphery of an opening of a building using the building exterior material according to any one of claims 1 to 9.

14. A method for waterproofing a roof of a building using the building exterior material according to any one of claims 1 to 9.

## Patentansprüche

1. Gebäudeaußenmaterial, umfassend ein Gebäudeaußensubstrat, das mit einer härtbaren Zusammensetzung beschichtet ist, die ein organisches Polymer (A), das eine siliciumhaltige Gruppe enthält, die durch Ausbilden einer Siloxanbindung quervernetzen kann, und einen Weichmacher (B) umfasst,
wobei das organische Polymer (A) wenigstens eines der folgenden ist:
ein Polyoxyalkylenpolymer (A1), das eine Oxyethylenwiederholeinheit in einer Hauptkette enthält, wobei ein Gewicht der Oxyethylenwiederholeinheit in der Komponente (A1) 1 bis 80 Gewichts-% des Gesamtgewichts der Komponente (A1) beträgt, und
ein (Meth)Acrylatpolymer (A2), das eine Oxyethylenwiederholeinheit an einer Seitenkette enthält, wobei ein Gewicht der Oxyethylenwiederholeinheit in der Komponente (A2) 1 bis 50 Gewichts-% des Gesamtgewichts der Komponente (A2) beträgt,
wobei der Weichmacher (B) ein Polyoxyalkylenpolymer (B1) ist, das eine Oxyethylenwiederholeinheit in einer Hauptkette enthält, und
die härtbare Zusammensetzung in ein gehärtetes Produkt ausgehärtet wird, das eine Dicke von 0,1 bis 3,0 mm aufweist.

2. Gebäudeaußenmaterial nach Anspruch 1, wobei ein Gewicht der Oxyethylenwiederholeinheit in der Komponente (B1) 1 bis 80 Gewichts-% des Gesamtgewichts der Komponente (B1) beträgt.

3. Gebäudeaußenmaterial nach Anspruch 1 oder 2, wobei das Polyoxyalkylenpolymer (B1) Oxyethylen und Oxypropylen als Oxyalkylenwiederholeinheiten umfasst, die eine Hauptkette bilden, und ein Gewichtsverhältnis der Oxyethylen- und Oxypropylenwiederholeinheiten 10/90 und 80/20 beträgt.

4. Gebäudeaußenmaterial nach einem der Ansprüche 1 bis 3, wobei der Weichmacher (B) ein durch Terminalgruppenanalyse gemessenes Zahlenmittel des Molekulargewichts von 300 bis 15.000 aufweist.

5. Gebäudeaußenmaterial nach einem der Ansprüche 1 bis 4, wobei das Polyoxyalkylenpolymer (A1) eine Oxyethylenwiederholeinheit und Oxypropylenwiederholeinheit enthält, ein Gewicht der Oxyethylenwiederholeinheit in der Komponente (A1) 1 bis 80 Gewichts-% des Gesamtgewichts der Komponente (A1) beträgt und ein Gewicht der Oxypropylenwiederholeinheit in der Komponente (A1) 1 bis 95 Gewichts-% des Gesamtgewichtes der Komponente (A1) beträgt.

6. Gebäudeaußenmaterial nach einem der Ansprüche 1 bis 5, wobei das Polyoxyalkylenpolymer (A1) nur aus Oxyethylen und Oxypropylen als Oxyalkylenwiederholeinheiten besteht, die eine Hauptkette bilden, und ein Gesichtsverhältnis der Oxyethylen- und Oxypropylenwiederholeinheiten 5/95 bis 80/20 beträgt.

7. Gebäudeaußenmaterial nach einem der Ansprüche 1 bis 6, wobei das Gebäudeaußensubstrat ein holzbasiertes Substrat oder ein anorganisches Substrat ist.

8. Gebäudeaußenmaterial nach Anspruch 7, wobei das holzbasierte Substrat wenigstens eines ist, das aus der aus Massivholzen, Sperrholzen, Spanplatten, Grobspanplatten, Faserplatten, Holzkernplatten und Furnierschichtholzen bestehenden Gruppe ausgewählt ist.

9. Gebäudeaußenmaterial nach Anspruch 8, wobei das anorganische Substrat wenigstens eines ist, das aus der aus Beton, Mörtel, ALC, Gips, Fassadenplatten und Schiefertafeln bestehenden Gruppe ausgewählt ist.

10. Gebäudeaußenwandmaterial, umfassend das Gebäudeaußenmaterial nach einem der Ansprüche 1 bis 9.

11. Verfahren zum Wasserdichtmachen eines Gebäudes unter Verwendung des Gebäudeaußenmaterials nach einem der Ansprüche 1 bis 9.

12. Verfahren zum Wasserdichtmachen einer Außenwand eines Gebäudes unter Verwendung des Gebäudeaußenmaterials nach einem der Ansprüche 1 bis 9.

13. Verfahren zum Wasserdichtmachen eines Umrisses einer Öffnung eines Gebäudes unter Verwendung des Gebäudeaußenmaterials nach einem der Ansprüche 1 bis 9.

14. Verfahren zum Wasserdichtmachen eines Dachs eines Gebäudes unter Verwendung des Gebäudeaußenmaterials nach einem der Ansprüche 1 bis 9.

## Revendications

1. Matériau d'extérieur de construction, comprenant un substrat d'extérieur de construction revêtu avec une composition durcissable comprenant un polymère organique (A) contenant un groupe contenant du silicium capable d'être réticulé en formant une liaison siloxane et un plastifiant (B),
dans lequel le polymère organique (A) est au moins un de :
un polymère de polyoxyalkylène (A1) contenant une unité répétitive d'oxyéthylène dans un squelette de structure, une masse de l'unité répétitive d'oxyéthylène dans le constituant (A1) étant de 1 à 80 % en masse de la masse totale du constituant (A1), et
un polymère de (méth)acrylate (A2) contenant une unité répétitive d'oxyéthylène sur une chaîne latérale, une masse de l'unité répétitive d'oxyéthylène dans le constituant (A2) étant de 1 à 50 % en masse de la masse totale du constituant (A2),
le plastifiant (B) est un polymère de polyoxyalkylène (B1), contenant une unité répétitive d'oxyéthylène dans un squelette de structure, et
la composition durcissable est durcie en un produit durci ayant une épaisseur de 0,1 à 3,0 mm.

2. Matériau d'extérieur de construction selon la revendication 1, dans lequel une masse de l'unité répétitive d'oxyéthylène dans le constituant (B1) est de 1 à 80 % en masse de la masse totale du constituant (B1).

3. Matériau d'extérieur de construction selon la revendication 1 ou 2, dans lequel le polymère de polyoxyalkylène (B1) comprend de l'oxyéthylène et de l'oxypropylène comme unités répétitives d'oxyalkylène constituant un squelette de structure, et un rapport massique des unités répétitives d'oxyéthylène et d'oxypropylène est de 10/90 à 80/20.

4. Matériau d'extérieur de construction selon l'une quelconque des revendications 1 à 3, dans lequel le plastifiant (B) présente une masse moléculaire moyenne en nombre mesurée par l'analyse de groupe terminal de 300 à 15 000.

5. Matériau d'extérieur de construction selon l'une quelconque des revendications 1 à 4, dans lequel le polymère de polyoxyalkylène (A1) contient une unité répétitive d'oxyéthylène et une unité répétitive d'oxypropylène ; une masse de l'unité répétitive d'oxyéthylène dans le constituant (A1) est de 1 à 80 % en masse de la masse totale du constituant (A1) ; et une masse de l'unité répétitive d'oxypropylène dans le constituant (A1) est de 1 à 95 % en masse de la masse totale du constituant (A1).

6. Matériau d'extérieur de construction selon l'une quelconque des revendications 1 à 5, dans lequel le polymère de polyoxyalkylène (A1) consiste uniquement en oxyéthylène et oxypropylène comme unités répétitives d'oxyalkylène constituant un squelette de structure, et un rapport massique des unités répétitives d'oxyéthylène et d'oxypropylène est de 5/95 à 80/20.

7. Matériau d'extérieur de construction selon l'une quelconque des revendications 1 à 6, dans lequel le substrat d'extérieur de construction est un substrat à base de bois ou un substrat inorganique.

8. Matériau d'extérieur de construction selon la revendication 7, dans lequel le substrat à base de bois est au moins un choisi dans le groupe constitué de bois solides, contreplaqués, panneaux de particules, panneaux à torons orientés, panneaux de fibres, panneaux à noyaux de bois et bois de placages stratifiés.

9. Matériau d'extérieur de construction selon la revendication 7, dans lequel le substrat inorganique est au moins un choisi dans le groupe constitué de béton, mortier, ALC, gypse, panneaux latéraux, et ardoises.

10. Matériau de paroi d'extérieur de construction, comprenant le matériau d'extérieur de construction selon l'une quelconque des revendications 1 à 9.

11. Procédé d'imperméabilisation d'une construction utilisant le matériau d'extérieur de construction selon l'une quelconque des revendications 1 à 9.

12. Procédé d'imperméabilisation d'une paroi extérieure d'une construction utilisant le matériau d'extérieur de construction selon l'une quelconque des revendications 1 à 9.

13. Procédé d'imperméabilisation d'une périphérie d'une ouverture d'une construction utilisant le matériau d'extérieur de construction selon l'une quelconque des revendications 1 à 9.

14. Procédé d'imperméabilisation d'un toit d'une construction utilisant le matériau d'extérieur de construction selon l'une quelconque des revendications 1 à 9.
